# EUROPEAN PATENT APPLICATION

(11) **EP 0 903 892 A1**
(43) Date of publication of application: **24.03.1999**
(21) Application number: 98850138.3
(22) Date of filing: 11.09.1998
(51) Int. Cl.: H04L 12/28, H04L 12/56, H04L 9/32

(54) **Security arrangement and method in a data communication system**

(30) Priority: 12.09.1997 SE 9703327
(71) Applicant: TELEFONAKTIEBOLAGET LM ERICSSON, 126 25 Stockholm (SE)
(72) Inventor: Larsson, Martin, 653 45 Karlstad (SE)
(74) Representative: Hammond, Andrew

(57) **Abstract**

The present invention relates to a security arrangement in a wireless data communications network (13), including at least one client station and a service providing station, each being connected to at least one communications means (11, 12) and each being arranged with means (20) to convert data to be transmitted to data packets or data packets to data. The arrangement includes a security host (21), which prompts the client to enter a user name and a password, said security host (21) being arranged to allow the service provider station to initialize the communication means before running the security functions and to directly initialize the communication means connected to the security host without security checks from the security host, before access being accepted.

## Description

### TECHNICAL FIELD OF THE INVENTION

The present invention relates to a security arrangement and a method thereof in a wireless data communication network, including at least one client station and a service providing station.

Furthermore, the invention particularly relates to a security arrangement in a wireless computer network system.

### DESCRIPTION OF THE RELATED ART

In a communication network, it is important that the client having access to the net work is connected while fraud connections are prevented.

Several types of security arrangements are known, such as commonly used entering of client identity including a user name and a password.

It is also known, for example through US 5,539,824 to provide a client station with a security key and arranging an authentication device to provide an additional layer of security. Then it is verified whether a client station requesting access to a service provider station posses the security key before access to the service provider is accepted.

Moreover, existing network systems do not provide facilities for a direct access of a distant or mobile terminal to the network. A travelling employee, for example, when connecting hers/his computer to the network of hers/his office, must use modem to establish communication through telephone lines (or a mobile telephone) or other locally available equipments (if adaptable to the computer) to access the network. Generally, the wireless networks demand more security than stationary networks.

### SUMMARY

The main objective of the present invention is to provide a security arrangement that fulfills the demands of the present and future needs and gives high security when accessing a network.

Moreover, what is needed is a wireless data communication arrangement, which allows error-free and secure communications with high security.

For these reasons, a radio transceiver is arranged to transmit and/or receive data packets with at least one assigned, by the user determined or randomly selected low radio frequency. In a preferred embodiment the conversions means are terminal node controllers (TNCs). The TNC automatically divides computer generated messages to be transmitted into data packets with a destination address, keys a transmitting function of the transceiver and sends the data packets through the transceiver. The transceiver may be arranged to scan the low radio frequencies for detection of a data packet. In an advantageous embodiment the data is compressed before transmission and multiple packets are transmitted on each frequency and/or channels are shared and/or packets are arranged with digital signatures to increase the transmission speed. For security reasons the packets are encrypted.

Advantageously, the invention is implemented in an at least partly wireless data packet communication network system. The system includes at least one client workstation and at least one service provider station. The communication is carried out by means of radio signals generated by radio transmitting stations, connected to the client workstation or service provider station. The client workstation and the service provider station each are arranged with means to generate a communication protocol which allows a Point to Point Protocol (PPP) to be tunnelled through an IP network over said radio transmitting stations. A reliable communication is obtained as the protocol queries the status of communicating stations, provides in-band management, allocated communication channels and place outgoing calls, notifies the service provider on incoming calls, transmits and receives user data with follow control in both directions, and notifies the service provider about disconnected calls. Moreover, the communication protocol uses an enhanced Generic Routing Encapsulation mechanism to provide a flow and congestion-controlled encapsulated data packets. An advantageous feature is that the tunnel is defined between pair of Wireless Network access Server and a communication protocol Access Concentrator.

To increase the communication speed, plurality of connection sessions is multiplexed on a single tunnel and the point-to-point protocol packets are multiplexed and demultiplexed over a single tunnel. The functions of the network are divided; the communication protocol Access Concentrator is arranged to interface a network and control radio transceivers or terminal adapters, logically terminate a communications session of a point-to-point-protocol link control protocol, and if needed participate in point-to-point-protocol authentication procedures; the Wireless Network access Server is arranged for channel aggregation and bundle management for point-to-point-protocol multi link protocol, logical termination of various point-to-point-protocol network control protocols and multiprotocol routing and bridging.

To obtain a global network the radio communication is carried out over a low frequency band, preferably in range of about 1 kHz to about 50000 kHz.

The invention also presents an advantageous method for wireless data communication between a client station and a service provider, each being arranged with means to generate data packets and each being connected to a radio transceiver. The method comprises arranging a direct communications path, so-called tunnel, between the client station and the service provider, generating a communication protocol which allows a Point to Point Protocol to be tunnelled through an Intemet protocol network over said communication path, transmitting or receiving said communication protocol by means of said transceivers, and transferring said received communication protocol to or from a computer instruction signal. The reliability is achieved by establishing a Control Connection, controlling the tunnel and sessions assigned to the tunnel, maintaining a state for each client station connected, creating a session when an end-to-end point-to-point protocol connection is attempted between a client station and a Network access Server sending data packets related to a communication session over the tunnel between the communication protocol Access Concentrator and said Network access Server. The known structure of the method characterised by that the control connection is a standard transfer control protocol session over which communication protocol call control and management information are passed. In one embodiment, for each communication protocol Access Concentrator (WPAC) and Network access Server (WPNS) pair both a tunnel and a control connection exists.

According to the method the flow control through the tunnel is performed by a sliding window used on the communication protocol by each side of the data exchange. Preferably the sliding window protocol allows acknowledgment of multiple packets with a single acknowledgment, and all outstanding packets with a sequence number lower or equal to the acknowledgment number are considered acknowledged.

There is also arranged a security arrangement in a wireless low-frequency data communications network, according to the invention, using data packets, including at least one client station and a service provider station, each being connected to at least one communication means and each being arranged with means to convert data to be transmitted to data packets or data packets to data. In one embodiment the client station is arranged with a security key and an authentication device is arranged to provide an additional layer of security, by verifying whether a client station requesting access to the service provider station posses the security key before access to the service provider is accepted. In another embodiment, the security arrangement consists of two hardware devices: a security host and a security card, the security host being arranged between the service provider station and the communication means. The security card generates different access codes every time unit, which are synchronized with a code generated at the security host every time unit and at the connection time the client sends the code generated by the security card to the host and the code is correct, the security host accepts connection of the client with the service provider server. Yet another embodiment is possible, in which the security host prompts the client to enter a user name and a password, said security host is arranged to allow the service provider station to initialize the communication means before running the security functions and to directly initialize the communication means connected to the security host without security checks from the security host, before access being accepted.

### BRIEF DESCRIPTION OF THE DRAWINGS

In the following, the invention will be further described in a non-limiting way under reference to the accompanying drawings in which:
- Fig. 1: is a block diagram illustrating a data communications network.
- Fig. 2: is a block diagram of a workstation/server site embodiment according to the invention.

### DETAILED DESCRIPTION OF THE EMBODIMENTS

An example of a communication network in its simplest form, includes at least two computer units communicating with each other in a configuration, a so-called workgroup, over a low frequency radio connection using radio packets. In this kind of networking, each computer unit can act both as a server and a client terminal. The invention is not limited to this type of network and may be implemented in any kind of data communication network.

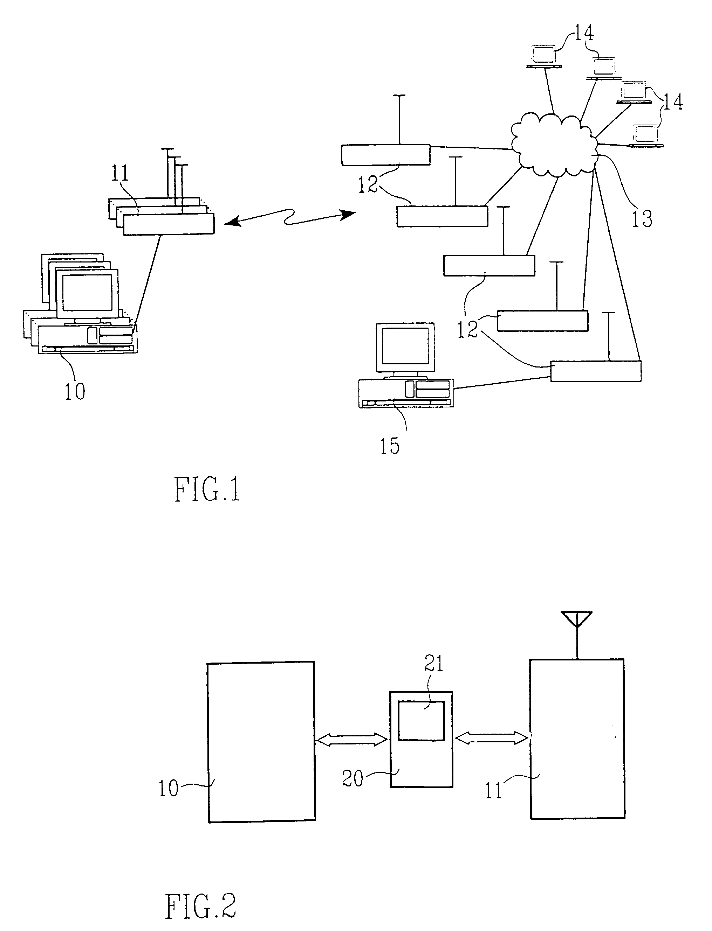

A more complicated embodiment of the arrangement is illustrated in fig. 1. The arrangement comprises a first computer terminal 10, for example a PC, connected to a radio transmitting and receiving unit, so-called transceiver unit 11 (TU). In this case, the computer unit and the transceiver unit 11 form the client workstation (WS) site of the data network arranged to access the network for services, such as file transfer, mailing, database handling, Intranet/Internet services etc. The network service provider (SP) site consists of one or several radio transceiver units 12, which can be connected either to a network 13 of computer terminals 14 and/or to one or several server units 15. The arrangement provides a wireless data communication network. The transceiver units 11 and 12 are arranged to operate in low-frequency bands, specially between about 1 to about 50000 kHz and particularly in one or more of 100-1800 kHz, 1810-1850 kHz, 3500-3800 kHz, 7000-7100 kHz, 10100-10150 kHz, 14000-14350 kHz, 18068-18168 kHz, 21000-21450kHz, 24890-24990 kHz and 28000-29700 kHz bands (e.g. depending on which country or region transmission/reception is carried out.) The mentioned frequency bands, allow radio traffic of type I - Telegraphy and digital traffic (including packet radio) and on the highest frequency band also type II traffic, i.e. telephony, digital traffic (radio packets), SSTV (slow scan TV) and the facsimile, is possible.

The lower frequencies (1 - 50000 kHz) permit data communication over substantially unlimited distances between the workstation and the service provider (server or network) and no or very few link stations, repeaters or the like are needed. At the service provider site, the transceiver units 12 can be connected to gateways (not shown) to allow communication with different types of networks.

The workstation or server site is schematically illustrated in fig. 2, which according to fig. 1 uses a packet radio network. The signals from the computer unit 10 are converted to radio packets before they are transmitted to the service provider. The conversion is carried out in a Terminal Node Controller (TNC) 20. TNC automatically divides the data messages to be transmitted into packets, keys the transmitter 11 and sends the packets to transmitting part of the transceiver unit 11. While receiving packets (from the SP), the TNC 20 automatically decodes, checks for errors, and transmits the decoded message to the computer unit 10. In a preferred embodiment the computer unit 10 is serially connected to TNC 20 using transmit, receive and ground pins. The TNC in turn is connected to the transceiver unit, for example through an audio connection using Push to Talk, Mid Audio, ground and Speaker Audio connections. Obviously, these types of connections are given as an example and other forms of connections such as parallel, infrared etc. may occur.

The transceiver unit may be a combined or standalone transmitter and receiver, which at least can transmit and receive in the specified low frequency region. In an embodiment (but not necessarily) a client site transceiver includes one transmitter and one receiver unit but the services provider site transceiver includes one or several transmitters and one or several receivers.

Packets have many advantages over other digital communication modes, e.g. transparency, error correction and automatic control. Hence, the packet radio provides error-free communications because of the built in error detection schemes. If a packet is received, it is checked for errors before being transferred to its destination. Moreover, packet radio, unlike voice communications, allows many users to simultaneously use the same frequency channel.

It is possible to allow multiple packet transmissions on each frequency, shared channels and digital signature on the packets can be applied. Different kinds of (realtime) encryptions can be used to increase the transmission security. Furthermore, data transmissions over a wireless packet network (switched or directed) are much more difficult to capture than voice transmissions, for instance over a cellular voice network. Unlike conversations in the cellular environment, which are continuos and easy to monitor by simple eardropers, massages in form of packets are sent in bursts. Capturing such messages is only possible if the radio frequency interface can be descrambled, which requires sophisticated equipments.

In a system according to the invention a Security Host 21 (SH) is implemented in the TNC 20. However, SH may be arranged standalone before or after TNC. The SH is an authentication device that verifies whether a caller from a remote client is authorized to connect to the remote access server of the service provider. This verification may be a supplement to the security measurements already implemented at the remote access server. The SH sits can be arranged between the remote client and the remote access server. The SH provides an additional layer of security, e.g. by requiring a hardware key of some kind (for example insertable in the parallel port of a computer etc) in order to provide authentication. Verification that the remote client physically posses the key takes place, for example by sending a query to the calling part and receiving the key, before access to the remote access server is accepted. This open architecture allows clients/customers to choose from a variety of security hosts to augment the security in the remote access server.

In an application, for example, a security system consists of two hardware devices: a security host and a security card. The security host is installed between the remote access server and its TNC (modem). The security card is a small unit, e.g. in size of a credit card. The security card may display different access-codes every time unit. This code is synchronized with a code generated at security host every time unit. When connecting, the remote client sends the code generated by the security card to the host. If the code is correct, the security host accepts the connection of the remote client with the remote access server.

In yet another embodiment, a security host prompts the remote client to enter a user-name (which may or may not be the same as the remote access user-name) and a password (which differs from the remote access password). The security host must be configured to allow a Remote Access Server (RAS) to initialize the communication means before the security functions take affect. The RAS must also be able to directly initialize the communication means connected to the security host without security checks from the security host. The SH might interpret the RASs attempt to initialize the communication means as an attempt to dial out.

Depending on the used transmission frequency, modulation type and data compression of the packets, it is possible to obtain a transmission speed of from 1200 bps to 512000 bps (bits per second). Any known data compression technics can be used. The data compression mechanism can be integrated in the communication software, in the computer units, the TNC or the transceivers.

The communication protocol may be one or several known protocols, such as X.25, AX25, Dual, VANCOUVER, TCP/IP, etc. AX.25 (Amateur X.25) is similar to X.25 level 2 in structure with some extensions to make it more useful in the amateur radio environment, specifies channel access (ability to transmit on the channel) to be handled by a Carrier Sense Multiple Access (CSMA).

When a transmission is required, the TNC monitors the channel to see if someone else is transmitting. If no one else is transmitting, then the radio keys up and the TNC sends its packet after a positive security control conducted by SH 21 employing keys or the like. All other transmitting stations (transceivers) detect the packet and do not transmit until the packet transmission is done. A collision may arise if two or more radio stations transmit at same time. If a collision occurs, none of TNC's will receive a reply back from the last packet it sent. Each TNC will then wait a random amount of time and then retransmit the packet. The AX.25 protocol offers both connected and connectionless operation modes, and may be used either for point-to-point links, or to carry other protocols such as TCP/IP (Transmission Control Protocol/Internet Protocol) and NetRom. NetRom protocol uses AX.25 at its lowest layer as a data-link protocol and it features dynamic routing and node aliases.

Substantially, the same transmission, packeting, un packeting and security control procedures run on the workstation site are also run at the service provider site. At the service provider site, however, the TNC's may be connected to gateways to adapt the communication protocols to suitable network protocols.

In a typical application a subscriber calls, for example an Intemet Service Provider (ISP), to request for a connection. The ISP conducts a security check by sending a key or controlling a key part received in the message and if the result is positive it assigns a radio channel for connection, which may be initiated by the subscriber or automatically by the computer unit. Then the connection will be established by the subscriber running, for example a browser programme over the radio. The ISP then mails other initiation instructions by sending an initiation e-mail. The established connection will then appear as a normal network/Internet/Interanet connection.

In another application, a remote employee may wish to use a client station to connect to the computer network (local/wide area network) of his/her company by using the radio equipment (TNC, transceiver) connected to the client station. The entire computer network or parts of it can, according the invention, be a wireless, radio packet-based network. The employee may directly connect to the network by using special channel assigned to the transceiver or buy the service from a radio-based network service provider, which can connect the client station to the company network. The employee may possess a special hardware key or a security card applicable onto the terminal to be used. The service then will be initiated as a normal network connection with full functionality between the client station and the company network and the employee can use services such as e-mail, LAN-connection services, file transfer etc.

In yet another application the client workstation, for example in a submarine (in a submerged position), can directly be connected to a remote network, service provider or server by sending connection request messages in variety of channels. The connection request messages are provided with unique identity of the network/service provider that the client wishes to contact. The receiving station(s) at the service provider site scans through all or special channels assigned to it and if it (they) detects a connection request directed to it, it will then lock to the frequency and a network connection will be established, e.g. through tunnelling and the client will login. The usual login procedures such as password and user id control will run.

The invention is not limited the illustrated and described embodiments, but can be varied in a number of ways without departing from the scope of the appended claims and the arrangement and the method can be implemented in various ways depending on application, functional units, needs and requirements etc.

## Claims

1. A security arrangement in a wireless data communications network (13), including at least one client station and a service providing station, each being connected to at least one communications means (11, 12) and each being arranged with means (20) to convert data to be transmitted to data packets or data packets to data,
*characterised in*
that it includes a security host (21), which prompts the client to enter a user name and a password, said security host (21) being arranged to allow the service provider station to initialize the communication means before running the security functions and to directly initialize the communication means connected to the security host without security checks from the security host, before access being accepted.

2. A security arrangement in a wireless low-frequency data communications network using data packets, including at least one client station and a service provider station, each being connected to at least one radio communications means (11, 12) and each being arranged with means (20) to convert data to be transmitted to data packets or data packets to data,
*characterised in*
that the security arrangement consists of two hardware devices: a security host (21) and a security card, the security host being arranged between the service provider station and the communication means,
that the security card generates different access codes every time unit, which are synchronized with a code generated at the security host every time unit and
that at connection time the client sends the code generated by the security card to the host and if the code is correct, the security host accepts connection of the client with the service provider server.

3. Arrangement according to claim 1,
*characterised in*
that said network is wireless low-frequency communications network.

4. A method in a wireless data communications network, including at least one client station and a service providing station, each being connected to at least one communications means and each being arranged with means to convert data to be transmitted to data packets or data packets to data,
*characterised in*
that the method comprises the steps of
- arranging a security host,
- said security hot prompting the client to enter a user name and a password,
- said security host being arranged to allow the service provider station to initialize the communication means before running the security functions and to directly initialize the communication means connected to the security host without security checks from the security host, before access being accepted.

5. A method in a wireless data communications network, including at least one client station and a service providing station, each being connected to at least one communications means and each being arranged with means to convert data to be transmitted to data packets or data packets to data,
*characterised in*
that the method comprises the steps of
- arranging hardware devices: a security host and a security card, the security host being arranged between the service provider station and the communication means,
- the security card being arranged to generate different access codes every time unit, which are synchronized with a code generated at the security host every time unit and
- at connection time sending the code generated by the security card from the client to the host and if the code is correct, the security host accepting connection of the client to the service provider server.
